# EUROPEAN PATENT SPECIFICATION

(11) **EP 3 604 050 B1**
(45) Date of publication and mention of the grant of the patent: **17.03.2021**
(21) Application number: 18306048.2
(22) Date of filing: 01.08.2018
(51) Int. Cl.: B60S 1/08, G01N 21/552

(54) **OPTICAL MOISTURE SENSOR FOR AUTOMOTIVE APPLICATIONS**
OPTISCHER FEUCHTIGKEITSSENSOR FÜR KRAFTFAHRZEUGANWENDUNGEN
CAPTEUR D'HUMIDITÉ OPTIQUE POUR DES APPLICATIONS AUTOMOBILES

(43) Date of publication of application: 05.02.2020
(73) Proprietor: MEAS France, 31027 Toulouse Cedex 3 (FR)
(72) Inventor: DURUPT, Emilien, 31460 Francarville (FR)
(74) Representative: Grünecker Patent- und Rechtsanwälte PartG mbB

(56) References cited:
- DE-A1- 19 701 258
- DE-A1- 19 821 335
- DE-A1-102011 101 744
- US-A- 5 661 303

## Description

The present invention relates to an optical moisture sensor of the internal reflection type which may be attached to a first surface of a transparent pane for detecting moisture on a second, opposing surface of the pane.

Such moisture sensors may be used as rain sensors on the windshield of a car when being mounted in the region of the windshield wiper. Depending on the amount of wetness present on the windshield, these rain sensors provide a signal to an evaluation circuit in order to control the windshield wiper. Another possible application of such sensors is to monitor windows such as roof windows in order to detect a rainfall and subsequently close open windows during a rainfall.

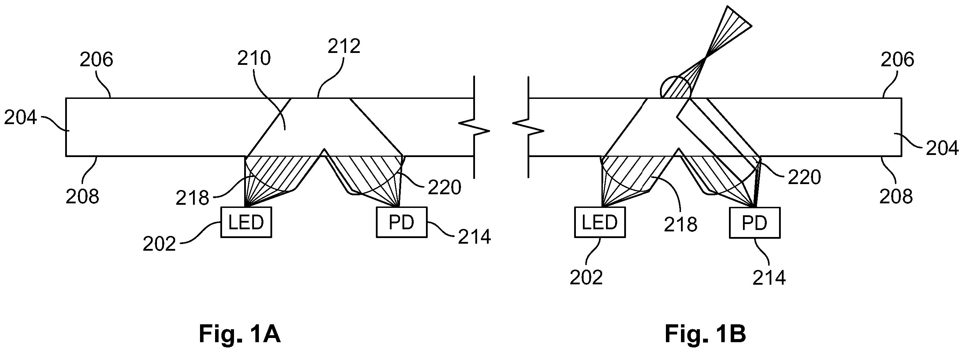

Fig. 1 schematically illustrates a conventional moisture sensor. In particular, Fig. 1(a) schematically illustrates the principle of an optical moisture sensor based on internal reflection. The sensor is mounted to the inner surface 208 of a transparent pane 204. In case the transparent pane 204 is a windshield of a car, the refractive index of the transparent pane may for instance be around n=1.5. Essentially, such a moisture sensor comprises at least one radiation emitter 202, for instance a light emitting diode (LED). The radiation emitter 202 emits radiation, for instance infrared radiation, towards the transparent pane 204, for instance the windshield of a car. Fig. 1(a) represents the situation where no moisture is present on the outer surface 206 opposing to the inner surface 208 whereto the sensor is mounted. In this case, the radiation 210 impinges on a sensitive area 212 under a critical angle of total reflection and is totally reflected towards a radiation detector 214, for instance a photodiode (PD).

On the other hand, as shown in Fig. 1(b), if a moisture droplet 216 with a refractive index of approximately n=1.3 is present on the pane 204 in the sensitive area 212, a part of the radiation 212 is coupled out of the pane 204. Consequently, a lower amount of radiation arrives at the radiation detector 214. Thus, a signal indicative of the amount of radiation detected by the radiation detector 214 is also indicative of an amount of moisture in the sensitive area 212 of the outer surface 206 of the pane 204.

It is known to provide means for shaping the emitted radiation for coupling an essentially parallel radiation beam into the pane 204. Usually, some sort of collimating lenses 218 are provided to couple the radiation from the LED 206 into the pane 204. On the other hand, it is known to provide focusing means 220 for coupling out the reflected radiation and focusing it on a sensitive area of the radiation detector 214.

DE 198 21 335 A1 relates to an opto-electronic sensor to detect degree of water or raindrop coverage of vehicle windscreen. The surface areas nearest to the beam emitter refract a first part of the radiation from a first region so that the beams are aligned in parallel and directed normal to the outer surface of the windscreen. A second part of the radiation is reflected from region of the rear outer surface of the emitter towards the windscreen outer surface and focused on a receiver.

US 5 661 303 A relates to a compact rain sensor for mounting on the inner surface of a windshield including collimator lenses and a detachable prismatic coupler to facilitate the mounting of emitters and detectors on a circuit board which is positioned parallel to the inner surface of the windshield

DE 10 2011 101744 A1 relates to a rain sensor comprising a transmitter and a receiver, where the transmitter comprises a transmission unit and a transmission optics arranged in the optical path of the transmission unit. The transmission optics comprises two separate signal coupling-out structures, which are formed such that the signals leaving from the transmission optics form two separate and spaced apart signal bundles.

In order to provide an accurate and sensitive moisture sensor it is necessary to make use of the available radiation power to the highest possible extent. Moreover, is advantageous that the sensitive area 212 is as large as possible.

There is still a need for a moisture sensor that has low space requirements and can be fabricated economically, at the same time being robust and yielding accurate measurement results.

This object is solved by the subject matter of the independent claims. Advantageous embodiments of the present invention are the subject matter of the dependent claims.

The present invention is based on the idea that by using a parabolic mirror together with a collimating lens for coupling the radiation into the transparent pane, a much higher extent of the emitted into radiation can be used and an enlarged sensitive area can be produced on the outer surface of the transparent pane. At the same time, the arrangement according to the present invention is particularly space saving and robust.

In particular, a moisture sensor is provided for being mounted on a first surface of a transparent pane to detect moisture on a second, opposing surface of the pane. The moisture sensor comprises at least one radiation emitter for generating radiation be directed towards said second surface of the pane, at least one radiation detector for detecting radiation reflected by the second surface of the pane, and a beam shaping unit for shaping the radiation emitted by said emitter. According to the present invention, the beam shaping unit comprises at least one parabolic mirror for forming a first radiation beam from a first portion of the emitted radiation, and at least one collimating lens for forming at least one second radiation beam from a second part of the emitted radiation.

According to an advantageous embodiment of the present invention, the first and second radiation beam are directed towards the pane to form two moisture sensitive areas on the second surface of the pane which are covering at least partly different regions of the second surface. By separating the radiation emitted by the emitter into two or more radiation beams that strike the second surface in areas that are either overlapping or completely separated, the sensitive area of the moisture sensor can be enhanced. It is even possible to assess the degree of coverage by quantitatively evaluating the sensed radiation intensity.

According to the invention, the parabolic mirror is formed by a mirror surface of a transparent mirror body, wherein the radiation enters the mirror body through input surface and is reflected within the mirror body at the mirror surface by total internal reflection. This solution has the advantage that the parabolic mirror can be realized as one integral part with the collimating lens structure, for instance as a combined plastic optical component.

For utilizing the radiation even more effectively, the input surface is shaped as a concave lens.

A close to ideal parallelized radiation beam can be generated by arranging the radiation emitted at the focal point of the parabolic mirror.

The principles according to the present invention can be most effectively taken advantage of when the radiation emitter comprises at least one light emitting diode (LED) and/or when the radiation detector comprises at least one photo diode (PD).

According to another advantageous embodiment of the present invention, the moisture sensor comprises an essentially planar substrate, said at least one radiation emitter and said at least one radiation detector being assembled on the substrate, wherein said radiation emitter is arranged on the substrate with an optical axis of the emitter being oriented across to the planar substrate, and wherein said radiation detector is arranged on the substrate with an optical axis of the detector being oriented across to the planar substrate. This geometry allows for a particularly space saving arrangements of all components, so that the moisture sensor may for instance be integrated into the foot of a rear view mirror in a car.

In particular, the radiation emitter and said radiation detector may comprise surface mount devices (SMD), wherein said substrate comprises a printed circuit board (PCB). Thereby a robust and miniaturized geometry can be realized in a particularly economic way.

In order to guide as much of the reflected radiation towards the detector, the moisture sensor may further comprise at least one focusing lens element for focusing the reflected radiation on a transducer surface of said radiation detector. Thereby sensitivity and accuracy of the moisture sensor can be improved.

In order to cover a particularly large sensitive area, at the same time keeping the overall size of the sensor small, a plurality of radiation emitters may be arranged along a circumference of a circular segment of a planar carrier substrate. In this case, only a single radiation detector may be provided for detecting the reflected radiation originating from said plurality of radiation emitters. This facilitates the evaluation and enhances the sensitivity.

For focusing the radiation towards such a single detector, the focusing lens advantageously comprises an aspheric lens, for instance a Tire type toroidal lens. Toroidal mirrors are aspherical mirrors where the curvatures of two orthogonal axes (horizontal and vertical one) are different. As this is known for a person skilled in the art, lenses derived from Barrel or Tire shaped geometries with a rotation axis are possible. As an alternative solution, a free form lens (meaning without trivial revolution or translational symmetry axis) would be a suitable solution.

Such a lens may also be part of an integrated optical component that combines the optical elements which couple the radiation into the transparent pane with the optical elements which couple the radiation out of the transparent pane. This solution is particularly economic to fabricate, space saving, and robust.

According to a further advantageous embodiment of the present invention, the moisture sensor further comprises a housing that encapsulates the radiation emitter and the radiation detector at least partly, and an evaluation circuit for evaluating an output signal generated by said at least one radiation detector, wherein the evaluation circuit is arranged within said housing. Such an integrated assembly allows for facilitated mounting process in particular when the moisture sensor is used in a car. Moreover, also additional further sensors, such as sun load sensors or light sensors can be integrated into the housing and can be evaluated by the evaluation circuit.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic representation of an optical moisture sensor mounted to a transparent pane, (a) without moisture on the pane, (b) with moisture on the pane;
- **FIG. 2**: is a schematic cross sectional representation of an optical moisture sensor according to the present invention;
- **FIG. 3**: illustrates the radiation reflection caused by a parabolic mirror plane;
- **FIG. 4**: is a schematic perspective representation of an internal reflection parabolic mirror according to the present invention;
- **FIG. 5**: is a schematic perspective representation of a detail of the optical moisture sensor according to Fig. 1;
- **FIG. 6**: is a schematic top view of the optical moisture sensor according to Fig. 1;
- **FIG. 7**: is a schematic perspective view of an electronic components carrying part of the optical moisture sensor according to the present invention.

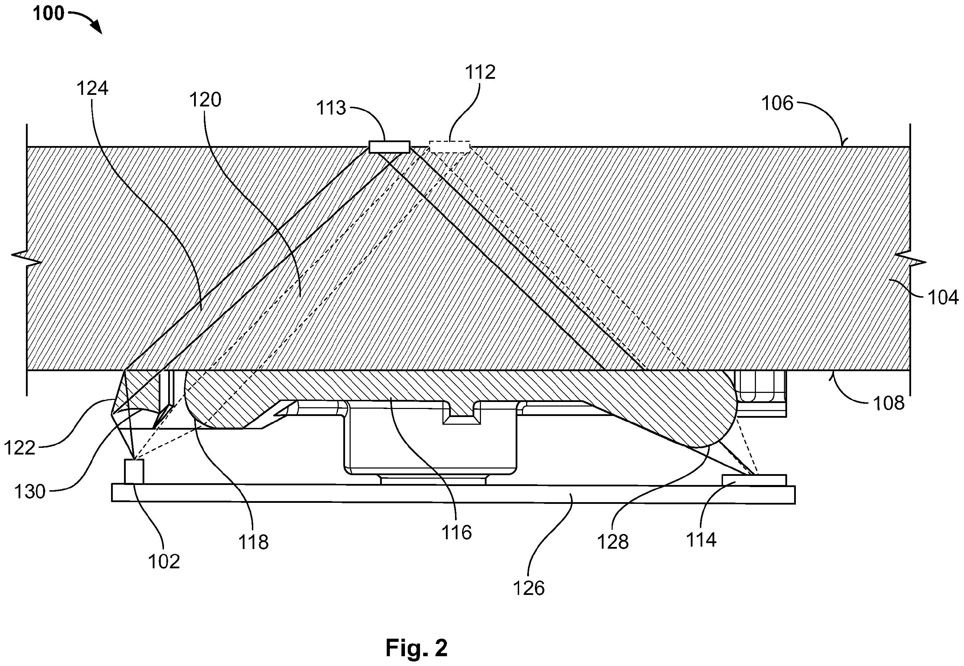

The present invention will now be explained in more detail with reference to the Figures and firstly referring to Fig. 2.

Fig. 2 shows an advantageous embodiment of a moisture sensor 100 according to the present invention. According to this embodiment, the moisture sensor 100 is mounted to a first surface 108 of a transparent pane 104. For instance, the transparent pane 104 may be the windshield of a car. However, it is clear for a person skilled in the art, that any other suitable application is of course also covered by the present invention. The moisture sensor 100 comprises one or more radiation emitters 102, for instance comprising light emitting diodes (LED). The radiation emitted by the LED 102 is guided by an optical coupling unit 116 towards the transparent pane 104.

According to the present invention, the optical coupling unit 116 comprises not only one collimating element for generating a parallel radiation beam, but at least two which are associated to one single radiation emitter 102. A first collimating element 118 comprises a collimating lens structure which generates a first radiation beam 120 from a first part of the emitted radiation. The first radiation beam 120 strikes the outer surface 106 of the transparent pane 104 under an angle that allows total internal reflection at the second surface 106 if no moisture is present on the surface 106. A radiation detector 114 detects the reflected radiation.

As explained with reference to Fig. 1, the presence of moisture causes a part of the impinging radiation beam 120 to be coupled to the outside the transparent pane 104, so that the intensity of the radiation detected by the radiation detector 114 is reduced. Consequently, the area in which the radiation beam 120 strikes the second surface 106 forms a first sensitive area 112.

According to the present invention, in addition to the first collimating element 118, a parabolic mirror 122 is provided as a second collimating element. The parabolic mirror 122 generates a second radiation beam 124 which is different from the first radiation beam 120. The second radiation beam 124 strikes the second (outer) surface 106 of the transparent pane 104 in a different region than the first radiation beam 120, thus forming a second sensitive area 113. This second sensitive area 113 may be completely separate from the first sensitive area 112 (as shown in Fig. 2) or it may in part be overlapping with the first sensitive area. Thereby, the sensitive area that is covered by the LED 102 and the detector 114 is enlarged, so that a higher sensitivity towards moisture disposition can be achieved.

According to the embodiment shown in Fig. 2, the radiation emitter 102 and the radiation detector 114 are assembled on a substrate 126. The substrate 126 may for instance be formed by a printed circuit board (PCB). However, as this is known to a person skilled in the art, also other suitable chip carriers, such as ceramic substrates or flexible substrates may be used as the substrate 126. Advantageously, the LED 102 and the PD 114 are both formed by surface mount devices (SMD). According to the present invention, the optical axes of both the radiation emitter 102 and the radiation detector 114 are directed essentially at right angles with respect to a plane defined by the substrate 126. Thus, a particularly small distance between the inner surface 108 of the transparent pane 104 and a housing of the sensor can be achieved.

For coupling out the reflected first and second beams 120, 124 from the transparent pane 104 towards the radiation detector 114, the optical coupling unit 116 comprises an integrated focusing element 128. The focusing element 128 is formed integrally with the first and second collimation elements, for instance from a suitable transparent plastic material.

According to the present invention, the parabolic mirror 122 is formed by the outer surface of a transparent element so that the radiation is reflected by internal reflection. For guiding as much of the radiation emitted by the radiation emitter 102 as possible towards the parabolic surface, a lens structure 130 may be provided at an input surface of the transparent element forming the parabolic mirror 122.

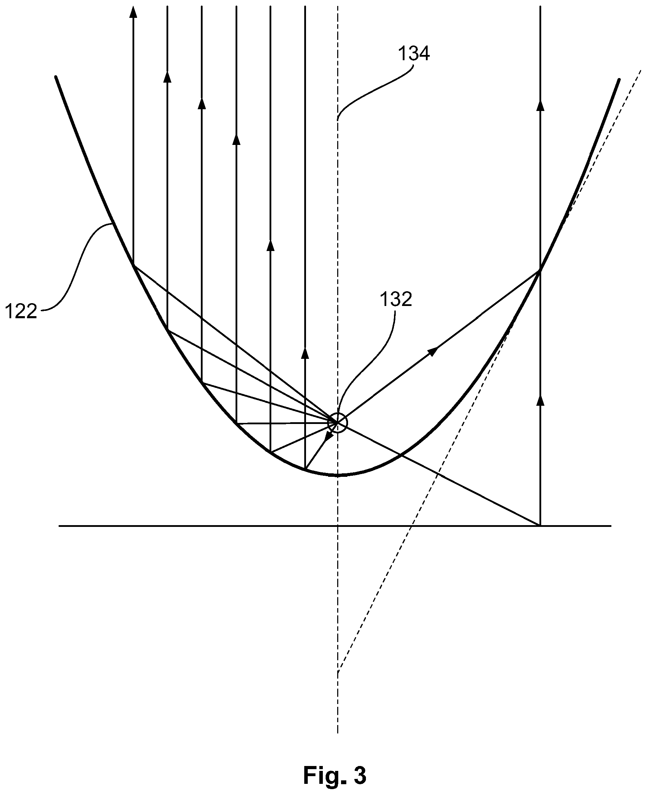

Fig. 3 depicts a schematic representation of a parabolic mirror 122. As this is generally known for a person skilled in the art, a parabolic mirror transforms the radiation emitted from a radiation source located in its focal point 132 into a bundle of parallel rays. The middle axis of the parabola is shown with the reference numeral 134.

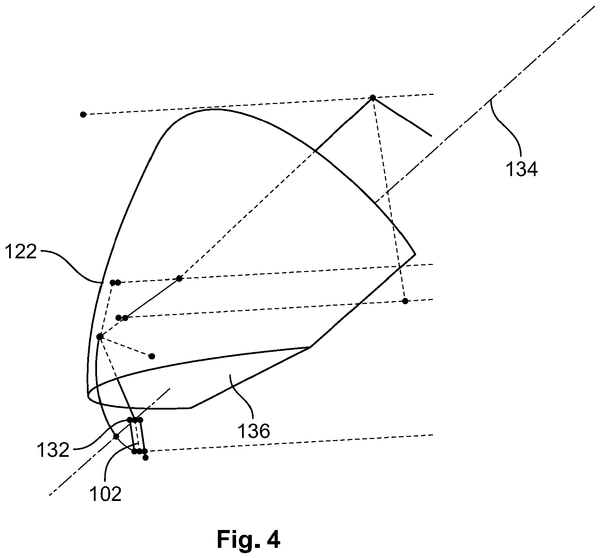

Fig. 4 shows an internal reflection parabolic mirror 122 according to the present invention. The radiation emitter 102 is located in the focal point 132 of the three-dimensional parabolic mirror 122. According to the present invention, radiation which is emitted by the LED 102 enters the mirror element at an input plane 136. The radiation is reflected at the inside of parabolic surface of the mirror element and is emitted as a radiation ray which is essentially parallel to the central axis 134. The parabolic outer surface 122 may additionally be coated with a reflective layer, such as a metallic layer.

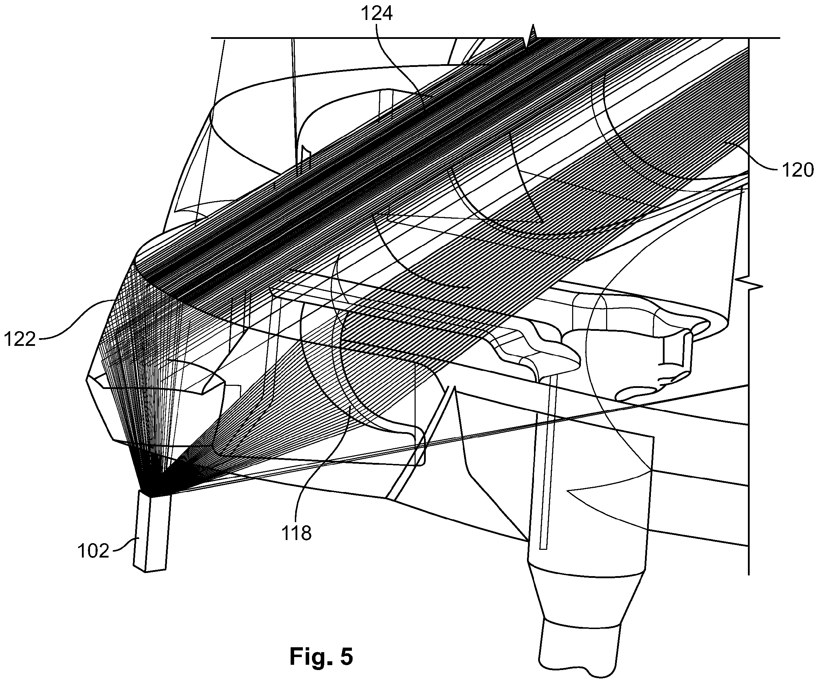

A perspective view of the arrangement according to the present invention is shown in Fig. 5. As can be seen from this Figure, two distinctly separated radiation beams 120, 124 are formed from the radiation that is emitted by the emitter 102.

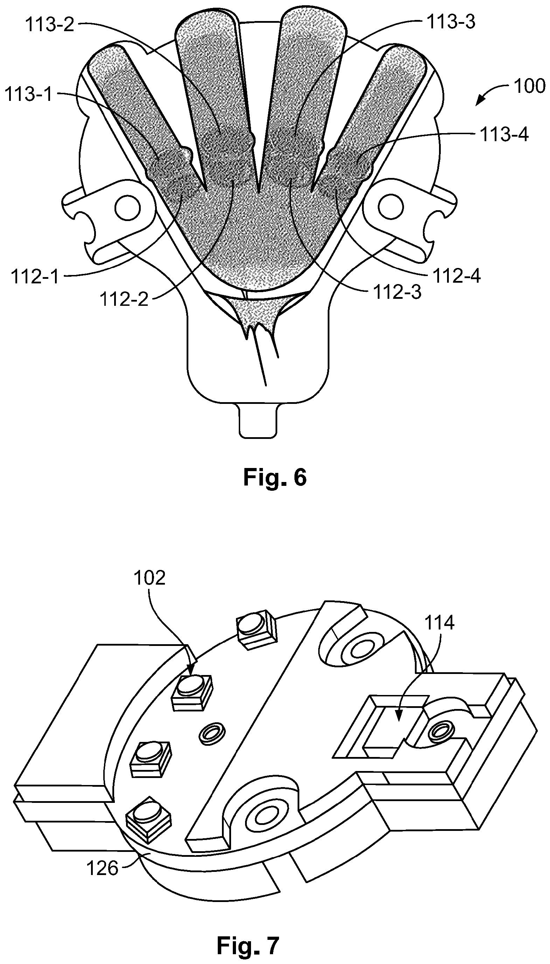

These separated beams 120, 124 cause separated sensitive area 112, 113 as become apparent from the following Fig. 6.

Fig. 6 shows an example of a moisture sensor arrangement 100 according to the present invention. In this particular embodiment, a plurality of radiation emitting elements (for instance four) is arranged around one single radiation detector. Each of the radiation emitters has two collimating elements 118, 122 as shown in Fig. 5. Consequently, each of the radiation emitters generates a first and a second sensitive area 112, 113. In Fig. 6, the first sensitive areas 112-1 to 112-4 and the second sensitive areas 113-1 to 113-4 are arranged in a fan-shaped manner around the photodetector 114. Consequently, the radiation that is reflected from these sensitive areas is directed towards the radiation detector and can be focused by a toroidal lens.

Fig. 7 depicts the lower part of the moisture sensor 100 according to the present mission. Four LEDs 102 are arranged in a fan-shaped manner around the photodetector 114 on a printed circuit board 126.

**REFERENCE NUMERALS**

| **Reference Numeral** | **Description** |
|---|---|
| 100 | Moisture sensor |
| 102 | Radiation emitter |
| 104 | Transparent pane |
| 106 | Outer surface |
| 108 | Inner surface |
| 110 | Radiation |
| 112 | First sensitive area |
| 113 | Second sensitive area |
| 114 | Radiation detector |
| 116 | Optical coupling unit |
| 118 | First collimating element |
| 120 | First radiation beam |
| 122 | Parabolic mirror |
| 124 | Second radiation beam |
| 126 | Substrate |
| 128 | Focusing element |
| 130 | Lens structure |
| 132 | Focal point |
| 134 | Central axis |
| 136 | Input surface |
| 202 | Radiation emitter of a moisture sensor |
| 204 | Transparent pane |
| 206 | Outer surface |
| 208 | Inner surface |
| 210 | Radiation |
| 212 | Sensitive area |
| 214 | Radiation detector |
| 216 | Moisture drop |

## Claims

1. Moisture sensor for being mounted on a first surface (108) of a transparent pane (104) to detect moisture on a second, opposing surface (106) of the pane, said moisture sensor (100) comprising:
at least one radiation emitter (102) for generating radiation be directed towards said second surface (106) of the pane (104),
at least one radiation detector (114) for detecting radiation reflected by the second surface (106) of the pane (104), and
a beam shaping unit (116) for shaping the radiation emitted by said emitter (102), wherein the beam shaping unit (116) comprises at least one collimating lens (118) for forming a first radiation beam (120) from a first portion of the emitted radiation, and at least one parabolic mirror (122) for forming at least one second radiation beam (124) from a second part of the emitted radiation,
wherein the parabolic mirror (122) is formed by a mirror surface of a transparent mirror body, wherein the radiation enters the mirror body through an input surface (136) and is reflected within the mirror body at the mirror surface by total internal reflection, and
**characterized in that:**
said input surface (136) is shaped as a concave lens.

2. Moisture sensor according to claim 1, wherein the first and second radiation beam (120, 124) are directed towards the pane (104) to form two moisture sensitive areas (112, 113) on the second surface (106) of the pane (104) which are at least partly covering different regions of the second surface (106).

3. Moisture sensor according to one of the preceding claims, wherein said radiation emitter (102) is arranged at a focal point (132) of the parabolic mirror (122).

4. Moisture sensor according to one of the preceding claims, wherein the at least one radiation emitter (102) comprises a light emitting diode (LED)

5. Moisture sensor according to claim 4, wherein the at least one radiation detector (114) comprises a photo diode (PD).

6. Moisture sensor according to one of the preceding claims, further comprising an essentially planar substrate (126), said at least one radiation emitter (102) and said at least one radiation detector (114) being assembled on the substrate (126), wherein said radiation emitter (102) is arranged on the substrate (126) with an optical axis of the emitter(102) being oriented across to the planar substrate (126), and wherein said radiation detector (114) is arranged on the substrate (126) with an optical axis of the detector (114) being oriented across to the planar substrate (126).

7. Moisture sensor according to claim 6, wherein said radiation emitter (102) and said radiation detector (114) comprise surface mount devices (SMD), and wherein said substrate (126) comprises a printed circuit board (PCB).

8. Moisture sensor according to one of the preceding claims, further comprising at least one focusing element (128) for focusing the reflected radiation on a transducer surface of said radiation detector (114).

9. Moisture sensor according to one of the preceding claims, wherein a plurality of radiation emitters (102) is arranged along a circumference of a circular segment of a planar carrier substrate (126).

10. Moisture sensor according to claim 9, wherein a single radiation detector (114) is provided for detecting the reflected radiation originating from said plurality of radiation emitters (102).

11. Moisture sensor according to 8 and 10, wherein said focusing element (128) comprises an aspheric lens.

12. Moisture sensor according to claim 11, wherein said focusing element (128) comprises a Tire type toroidal lens.

13. Moisture sensor according to one of the preceding claims, further comprising a housing that encapsulates the at least one radiation emitter (102) and the at least one radiation detector (114) at least partly, and an evaluation circuit for evaluating an output signal generated by said at least one radiation detector, wherein the evaluation circuit is arranged within said housing.

## Patentansprüche

1. Feuchtigkeitssensor für die Montage an einer ersten Oberfläche (108) einer transparenten Scheibe (104), um eine Feuchtigkeit an einer gegenüberliegenden zweiten Oberfläche (106) der Scheibe zu erfassen, wobei der Feuchtigkeitssensor (100) umfasst:
wenigstens einen Strahlungsemitter (102) zum Erzeugen einer Strahlung, die zu der zweiten Oberfläche (106) der Scheibe (104) gerichtet wird,
wenigstens einen Strahlungsdetektor (114) zum Erfassen einer Strahlung, die durch die zweite Oberfläche (106) der Scheibe (104) reflektiert wird, und
eine Strahlformungseinheit (116) zum Formen der durch den Emitter (102) emittierten Strahlung, wobei die Strahlformungseinheit (116) wenigstens eine Kollimatorlinse (118) zum Bilden eines ersten Strahlungsstrahls (120) aus einem ersten Teil der emittierten Strahlung und wenigstens einen Parabolspiegel (122) zum Bilden wenigstens eines zweiten Strahlungsstrahls (124) aus einem zweiten Teil der emittierten Strahlung umfasst,
wobei der Parabolspiegel (122) durch eine Spiegelfläche eines transparenten Spiegelkörpers gebildet wird, wobei die Strahlung in den Spiegelkörper durch eine Eingangsfläche (136) eintritt und in dem Spiegelkörper an der Spiegelfläche durch eine totale interne Reflexion reflektiert wird,
**dadurch gekennzeichnet, dass**
die Eingangsfläche (136) als eine konkave Linse geformt ist.

2. Feuchtigkeitssensor nach Anspruch 1, wobei der erste und der zweite Strahlungsstrahl (120, 124) zu der Scheibe (104) gerichtet werden, um zwei feuchtigkeitsempfindliche Bereiche (112, 113) auf der zweiten Oberfläche (106) der Scheibe (104) zu bilden, die wenigstens teilweise verschiedene Bereiche der zweiten Oberfläche (106) bedecken.

3. Feuchtigkeitssensor nach einem der vorstehenden Ansprüche, wobei der Strahlungsemitter (102) an einem Brennpunkt (132) des Parabolspiegels (122) angeordnet ist.

4. Feuchtigkeitssensor nach einem der vorstehenden Ansprüche, wobei der wenigstens eine Strahlungsemitter (102) eine Leuchtdiode (LED) ist.

5. Feuchtigkeitssensor nach Anspruch 4, wobei der wenigstens eine Strahlungsdetektor (114) eine Photodiode (PD) ist.

6. Feuchtigkeitssensor nach einem der vorstehenden Ansprüche, der weiterhin ein im Wesentlichen planares Substrat (126) umfasst, wobei der wenigstens eine Strahlungsemitter (102) und der wenigstens eine Strahlungsdetektor (114) an dem Substrat (126) montiert sind, wobei der Strahlungsemitter (102) an dem Substrat (126) derart angeordnet ist, dass eine optische Achse des Emitters (102) quer zu dem planaren Substrat (126) ausgerichtet ist, und wobei der Strahlungsdetektor (114) an dem Substrat (126) derart angeordnet ist, dass eine optische Achse des Detektors (114) quer zu dem planaren Substrat (126) angeordnet ist.

7. Feuchtigkeitssensor nach Anspruch 6, wobei der Strahlungsemitter (102) und der Strahlungsdetektor (114) oberflächenmontierte Bauelemente (SMD) sind und wobei das Substrat (126) eine Leiterplatte (PCB) ist.

8. Feuchtigkeitssensor nach einem der vorstehenden Ansprüche, der weiterhin wenigstens ein Fokussierungselement (128) für das Fokussieren der reflektierten Strahlung auf einer Transducerfläche des Strahlungsdetektors (114) umfasst.

9. Feuchtigkeitssensor nach einem der vorstehenden Ansprüche, wobei eine Vielzahl von Strahlungsemittern (102) entlang eines Umfangs eines Kreissegments eines planaren Trägersubstrats (126) angeordnet sind.

10. Feuchtigkeitssensor nach Anspruch 9, wobei ein einzelner Strahlungsdetektor (114) für das Erfassen der reflektierten Strahlung, die von der Vielzahl von Strahlungsemittern (102) ausgeht, vorgesehen ist.

11. Feuchtigkeitssensor nach Anspruch 8 und 10, wobei das Fokussierungselement (128) eine asphärische Linse ist.

12. Feuchtigkeitssensor nach Anspruch 11, wobei das Fokussierungselement (128) eine torische Linse des Reifentyps ist.

13. Feuchtigkeitssensor nach einem der vorstehenden Ansprüche, der weiterhin ein Gehäuse, das den wenigstens einen Strahlungsemitter (102) und den wenigstens einen Strahlungsdetektor (114) wenigstens teilweise einschließt, und eine Bewertungsschaltung für das Bewerten eines durch den wenigstens einen Strahlungsdetektor erzeugten Ausgangssignals umfasst, wobei die Bewertungsschaltung in dem Gehäuse angeordnet ist.

## Revendications

1. Capteur d'humidité à monter sur une première surface (108) d'un panneau transparent (104) pour détecter une humidité sur une deuxième surface opposée (106) du panneau, ledit capteur d'humidité (100) comprenant :
au moins un émetteur de rayonnement (102) pour générer un rayonnement à diriger vers ladite deuxième surface (106) du panneau (104),
au moins un détecteur de rayonnement (114) pour détecter un rayonnement réfléchi par la deuxième surface (106) du panneau (104), et
une unité de mise en forme de faisceau (116) pour mettre en forme le rayonnement émis par ledit émetteur (102), dans lequel l'unité de mise en forme de rayonnement (116) comprend au moins une lentille de collimation (118) pour former un premier faisceau de rayonnement (120) à partir d'une première partie du rayonnement émis, et au moins un miroir parabolique (122) pour former au moins un deuxième faisceau de rayonnement (124) à partir d'une deuxième partie du rayonnement émis,
dans lequel le miroir parabolique (122) est constitué d'une surface de miroir d'un corps de miroir transparent, dans lequel le rayonnement entre dans le corps de miroir via une surface d'entrée (136) et est reflété au sein du corps de miroir sur la surface de miroir par une réflexion interne totale, et
**caractérisé en ce que** :
ladite surface d'entrée (136) présente la forme d'une lentille concave.

2. Le capteur d'humidité selon la revendication 1, dans lequel les premier et deuxième faisceaux de rayonnement (120, 124) sont dirigés vers le panneau (104) pour former deux zones sensibles à l'humidité (112, 113) sur la deuxième surface (106) du panneau (104) qui couvrent au moins partiellement différentes zones de la deuxième surface (106).

3. Le capteur d'humidité selon l'une des revendications précédentes, dans lequel ledit émetteur de rayonnement (102) est disposé sur un point focal (132) du miroir parabolique (122).

4. Le capteur d'humidité selon l'une des revendications précédentes, dans lequel l'au moins un émetteur de rayonnement (102) comprend une diode électroluminescente (DEL).

5. Le capteur d'humidité selon la revendication 4, dans lequel l'au moins un détecteur de rayonnement (114) comprend une photodiode (PD).

6. Le capteur d'humidité selon l'une des revendications précédentes, comprenant en outre un substrat essentiellement planaire (126), ledit au moins un émetteur de rayonnement (102) et ledit au moins un détecteur de rayonnement (114) étant assemblés sur le substrat (126), dans lequel ledit émetteur de rayonnement (102) est disposé sur le substrat (126) avec un axe optique de l'émetteur (102) orienté transversalement vers le substrat planaire (126), et dans lequel ledit détecteur de rayonnement (114) est disposé sur le substrat (126) avec un axe optique de du détecteur (114) orienté transversalement vers le substrat planaire (126).

7. Le capteur d'humidité selon la revendication 6, dans lequel ledit émetteur de rayonnement (102) et ledit détecteur de rayonnement (114) comprennent des dispositifs montés en surface, SMD (Surface Mount Device), et dans lequel ledit substrat (126) comprend une carte de circuit imprimé, PCB (Printed Circuit Board).

8. Le capteur d'humidité selon l'une des revendications précédentes, comprenant en outre au moins un élément de focalisation (128) pour focaliser le rayonnement réfléchi sur une surface de transducteur dudit détecteur de rayonnement (114).

9. Le capteur d'humidité selon l'une des revendications précédentes, dans lequel une pluralité d'émetteurs de rayonnement (102) est disposée le long d'une circonférence d'un segment circulaire d'un substrat de support planaire (126).

10. Le capteur d'humidité selon la revendication 9, dans lequel un unique détecteur de rayonnement (114) est mis en place pour détecter le rayonnement réfléchi provenant de ladite pluralité d'émetteurs de rayonnement (102).

11. Le capteur d'humidité selon les revendications 8 et 10, dans lequel ledit élément de focalisation (128) comprend une lentille asphérique.

12. Le capteur d'humidité selon la revendication 11, dans lequel ledit élément de focalisation (128) comprend une lentille torique de type Tire (pneu).

13. Le capteur d'humidité selon l'une des revendications précédentes, comprenant en outre un boîtier qui encapsule l'au moins un émetteur de rayonnement (102) et l'au moins un détecteur de rayonnement (114) au moins partiellement, et un circuit d'évaluation pour évaluer un signal de sortie généré par ledit au moins un détecteur de rayonnement, dans lequel le circuit d'évaluation est disposé au sein dudit boîtier.
